# EUROPÄISCHE PATENTSCHRIFT

(11) **EP 1 388 619 B1**
(45) Veröffentlichungstag und Bekanntmachung des Hinweises auf die Patenterteilung: **17.03.2010**
(21) Anmeldenummer: 03102429.2
(22) Anmeldetag: 05.08.2003
(51) Int. Cl.: E04B 1/26, F16B 7/04, F16L 3/14

(54) **Befestigungsvorrichtung zur Fixierung eines Leitungsstrangs**
Device for fixing a pipe
Dispositif pour fixer un tuyau

(30) Priorität: 08.08.2002 DE 10236553
(43) Veröffentlichungstag der Anmeldung: 11.02.2004
(73) Patentinhaber: HILTI Aktiengesellschaft, 9494 Schaan (LI)
(72) Erfinder: Birnbaum, Ulrich, 86929, Penzing (DE)
(74) Vertreter: Wildi, Roland

(56) Entgegenhaltungen:
- EP-A- 0 593 858
- WO-A-02/057557
- DE-A- 3 026 221
- FR-A- 1 267 006
- US-A- 1 362 245
- US-A- 5 906 080
- US-A1- 2 470 991

## Beschreibung

### Technisches Gebiet

Die Erfindung betrifft eine Befestigungsvorrichtung zur Fixierung eines Leitungsstrangs, wie ein Rohr oder dergleichen, an einem Träger, insbesondere an einem Systemträger eines Montagesystems, der im Patentanspruch 1 genannten Art.

### Stand der Technik

Im industriellen Leitungsbau werden Leitungsstränge über Rahmen aus Stahlprofilen geführt. Neben den Standardprofilen von Stahlträgem werden zur Konstruktion dieser Rahmen Systemträger von Montagesystemen verwendet. Die Leitungsstränge müssen gegen unerwünschte Verschiebungen an den Profilen gesichert werden. Bei nicht isolierten Rohrleitungen werden beispielsweise Halteelemente um die Rohrleitungen geführt, deren freien Enden mittels Schweisslaschen an einem Profilträger angeschweisst werden können. Eine andere Möglichkeit stellen Klauenelemente dar, die eine, an den Rohrleitungen angeordnete Auflageplatten auf der Oberfläche des Profilträgers festklemmen.

Nachteilig an der bekannten Lösung ist, dass Schweissungen nur von spezialisierten Handwerkern erstellt werden dürfen und diese aufwändig in der Herstellung sind. Beispielsweise muss vor der Schweissung der Oberflächenschutz des Trägers im Bereich der Verbindung entfernt und anschliessend die Schweissstelle gegen Korrosion geschützt werden. In explosionsgefährdeten Bereichen dürfen ohne ein aufwändiges Genehmigungsverfahren und zusätzlichen provisorischen, baulichen Massnahmen keine Schweissungen erstellt werden. Anpassungen und Änderungen sind bei geschweissten Verbindungen nur unter einem grossen Aufwand durchführbar. Klauenelemente haben den Nachteil, dass beispielsweise für die verschiedenen Rohrdurchmesser und/oder Auflageplatten sowie die unterschiedlichen Profilquerschnitte eine Vielzahl von, in der Herstellung kostenintensive Teilen zur Verfügung gestellt werden müssen.

Aus der WO 02/057557 A1 ist ein Winkelelement als Verbindungselement zum Verbinden eines Holzträgers mit einem Blechträger bekannt. Das Winkelelement weist einen ersten Schenkel und einen, senkrecht zum ersten Schenkel ausgerichteten, zweiten Schenkel auf, wobei der erste Schenkel Öffnungen zur Befestigung des Winkelelements am Holzträger und der zweite Schenkel zwei Langlöcher zur Befestigung des Blechträgers am Winkelelement aufweist. Der erste Schenkel des Winkelelements umfasst ein Ausrichtmittel zur Ausrichtung des Winkelelements am Holzträger und das Langloch im zweiten Schenkel ist parallel zu diesem Ausrichtmittel angeordnet.

Eine Befestigungsvorrichtung gemäß des Oberbegriffs des Anspruchs 1 wird in DE-A-3 026 221 offenbart.

### Darstellung der Erfindung

Der vorliegenden Erfindung liegt die Aufgabe zugrunde, eine einfach herstellbare Leitungsstrangbefestigung zu schaffen, welche flexibel einsetzbar ist.

Die Aufgabe ist durch die Merkmale des Anspruchs 1 gelöst.

Gemäss der Erfindung umfasst die Befestigungsvorrichtung zur Fixierung eines Leitungsstrangs, wie ein Rohr oder dergleichen, an einem Träger, insbesondere an einem Systemträger eines Montagesystems, wobei der Träger ein Profil ist und Öffnungen in einem vordefinierten Abstand an zumindest einer der Aussenwandungen des Trägers aufweist, zumindest zwei Winkelelemente zur Befestigung zumindest eines Halteelements an dem Träger und zumindest ein Halteelement zur Befestigung eines Leitungsstrangs an den Winkelelementen. Die Winkelelemente weisen jeweils einen ersten Schenkel und einen, im Wesentlichen senkrecht zum ersten Schenkel ausgerichteten, zweiten Schenkel auf, wobei der erste Schenkel zumindest eine Öffnung zur Befestigung des Winkelelements am Träger und der zweite Schenkel zumindest ein Langloch zur Befestigung des Halteelements am Winkelelement aufweist. Der erste Schenkel des Winkelelements umfasst ein Ausrichtmittel zur Ausrichtung des Winkelelements am Träger und das Langloch im zweiten Schenkel ist parallel zu diesem Ausrichtmittel angeordnet. Das zumindest eine Halteelement weist einen ersten Schenkel und einen, mit dem ersten Schenkel über einen Verbindungsabschnitt verbundenen, zweiten Schenkel auf, wobei die freien Enden der Schenkel des Halteelements Befestigungsmittel aufweisen und durch die Langlöcher der Winkelelemente hindurchführbar sind.

Der erste Schenkel des Winkelelements weist beispielsweise als Ausrichtmittel eine auf den Träger abgestimmte Führung auf. Mit dieser Führung kann das Winkelelement ausgerichtet, am Träger positioniert und mittels eines Befestigungsmittels am Träger fixiert werden. Der Träger ist ein Profil und weist Öffnungen in einem vordefinierten Abstand an zumindest einer Aussenwandung auf. Ein geeignetes Befestigungsmittel ist beispielsweise eine Schraube, die an einem Ende einen Schraubkopf und an anderem Ende einen Gewindeabschnitt aufweist. Die Schraube wird durch die Öffnung im ersten Schenkel und den Öffnungen in den Aussenwandungen des Trägers hindurchgeführt, wobei die Öffnung im ersten Schenkel bevorzugt gleich wie die Öffnungen in dem Träger ausgebildet ist. Auf den Gewindeabschnitt wird eine Mutter aufgesetzt mittels der das Befestigungsmittel verspannt wird. Die Öffnungen in den Aussenwandungen des Trägers sind bevorzugt als Vierkant-Löcher ausgebildet. Damit die Schraube ohne ein Gegenhaltemittel verspannbar ist, weist die Schraube einen komplementär zu den Öffnungen ausgebildeten Führungsabschnitt auf, der die in die Öffnung eingesetzte Schraube gegen ein Verdrehen sichert. Die Öffnung im ersten Schenkel des Winkelelements weist vorzugsweise die gleiche Ausgestaltung wie die Öffnungen in den Aussenwandungen des Trägers auf. Wurde das Winkelelement an einer ungeeigneten Stelle am Träger befestigt oder ändern sich die Randbedingungen, so dass eine Umplatzierung des befestigten Winkelelements erforderlich ist, kann das Befestigungsmittel gelöst und das Winkelelement wiederverwendet werden.

Die Haltemittel werden in dem parallel zum Träger ausgerichteten, im zweiten Schenkel angeordneten Langloch befestigt. Die minimale Länge des Langlochs entspricht vorzugsweise der Summe des Abstands zweier, in der Aussenwandung des Trägers angeordneten Öffnungen sowie der lichten Weite einer dieser Öffnungen. Das Halteelement kann in dem Langloch stufenlos, losgelöst vom Rasterabstand der Öffnungen in zumindest einer der Aussenwandungen des Trägers positioniert werden. Das Winkelelement kann auch an sogenannten T- und I-Trägern angeordnet werden, wobei diese nur Öffnungen in einem vordefinierten Abstand in dem Steg des T- oder I-Trägers aufweisen.

Das Winkelelement kann auch zur Befestigung des Trägers an einem Untergrund, z. B. an einer Wand, an einer Decke, auf einem Boden, verwendet werden. In Abhängigkeit der vorhandenen Lasten werden mehr als ein Winkelelement zur Befestigung des Trägers an einem Untergrund angeordnet. Das Befestigungsmittel zur Befestigung des Winkelelements an dem Untergrund ist bevorzugt auf die Materialeigenschaften des entsprechenden Untergrundes angepasst.

Vorteilhaft ist die Aussenkontur der Auflagefläche zumindest des ersten Schenkels des Winkelelements komplementär zur Aussenkontur der Aufnahmefläche des Trägers. Die komplementär zur Aussenkontur des Trägers ausgestaltete Auflagefläche des ersten Schenkel kann als Ausrichtmittel für das Winkelelement dienen, so dass auf ein Führungsmittel zum Ausrichten des Winkelelements verzichtet werden kann. Bevorzugt stützt sich das Winkelelement bei einer Zugbelastung auf den zweiten Schenkel am Flansch des Trägers ab. Des Weiteren liegt der erste Schenkel eben an der Oberfläche an, wenn das Winkelelement an dem Träger angeordnet ist. Wird ein Systemträger eines Montagesystems zur Erstellung der Rahmenkonstruktion verwendet, ist der erste Schenkel zumindest zu der, im montierten Zustand vorhandenen Seitenflächen des Systemträgers komplementär.

Vorteilhafterweise ist das Winkelelement ein Stanz-/Biegeteil. Das Winkelelement ist beispielsweise aus einem Flachstahl oder Blech gefertigt. Das Winkelelement ist einfach und kostengünstig herstellbar.

Der zu fixierende Leitungsstrang wird entsprechend den gegebenen Randbedingungen über die, aus Trägem erstellte Rahmenkonstruktion und ohne Berücksichtigung der Befestigungsmöglichkeiten des Leitungsstrangs an dem Träger verlegt. Der Leitungsstrang liegt beispielsweise auf einem horizontal ausgerichteten Träger der Rahmenkonstruktion auf. Anschliessend werden die Winkelelemente an den Öffnungen in der Aussenwandung des Trägers angeordnet, die der gedachten, horizontalen Linie am nächstliegenden sind, die durch die in vertikaler Richtung vorhandenen, seitlichen Randabschnitten des Leitungsstrangs verläuft. Das Halteelement kann beispielsweise eine L-förmige Ausgestaltung mit einem ersten und einem zweiten Schenkel aufweisen. Einer dieser Schenkel dient als Haltemittel für den Leitungsstrang und der andere Schenkel wird durch das Langloch eines der angeordneten Winkelelemente geführt. Das Halteelement kann in dem Langloch des Winkelelements stufenlos verschoben und in der gewünschten Position mit dem Befestigungsmittel fixiert werden. In dem anderen, am Träger angeordneten Winkelelement wird analog ein zweites, L-förmiges Halteelement vorgesehen, so dass der Leitungsstrang sicher an dem Träger fixiert ist. Die Winkelelemente übernehmen den Grobraster des Trägers und die in den Langlöchern des Winkelelements verschiebbaren Halteelemente ermöglichen die stufenlose Feineinstellung.

Mit der stufenlosen Positioniermöglichkeit des Halteelements an dem Winkelelement können sämtliche Formen von Leitungssträngen an unterschiedlichen Trägem befestigt werden.

In einer bevorzugten Ausführungsform des Halteelements ist dieses im Wesentlichen U-förmig ausgebildet. Der Leitungsstrang wird von diesem Halteelement umfasst. Da das Halteelement mit seinen Schenkeln in den Langlöchern der beiden Winkelelemente hin- und herbewegt werden kann, lässt sich der Leitungsstrang in seiner verlegten Position fixieren.

Der von den Öffnungen in der Aussenwandung des Trägers vorgegebene Raster muss beim Verlegen des Leitungsstrangs zu dessen Befestigung nicht berücksichtigt werden. Mit nur zwei Winkelelementen können alle Halteelemente mit dem gleichen Querschnitt an einem Träger befestigt werden. Unabhängig von der Ausgestaltung des Halteelements und der Querschnittsform des zu fixierenden Leitungsstrangs.

Vorzugsweise ist das Halteelement aus einem Rundprofil, optional aus Metall, gefertigt. Das Rundprofil ist bevorzugt ein Rundstahl, der sich einfach in die gewünschte Form biegen lässt. Als Variante zu einem Metallwerkstoff kann das Halteelement aus einem geeigneten Kunststoff gefertigt sein, der sich einfach verformen lässt und die erstellte Form beibehält. Neben einem Rundprofil-Querschnitt kann der Querschnitt des Halteelements beispielsweise mehreckig oder oval ausgebildet sein. Auch die Verwendung von einfach verformbaren Hohlprofil-Querschnitten ist möglich.

Bevorzugt ist die Innenkontur des Verbindungsabschnitts des Halteelements komplementär zu der Aussenkontur des Leitungsstrangs. Handelt es sich bei dem zu fixierenden Leitungsstrang beispielsweise um eine Rohrleitung, weist der Verbindungsabschnitt bevorzugt einen als Halbkreis ausgebildeten Halteabschnitt, der das Rohr an dessen Aussenwandung umfasst, und an die Enden des Halbkreisabschnitts gerade verlaufende Schenkel auf. Ist die Aussenkontur des zu fixierenden Leitungsstrangs rechteckig, ist das Halteelement vorzugsweise U-förmig mit rechteckig zum Verbindungsabschnitt abgebogenen Schenkeln ausgebildet. Das Halteelement umfasst den Leitungsstrang vorzugsweise auch seitlich, so dass der Leitungsstrang gegen seitliche Verschiebungen gehalten ist.

Vorteilhafterweise umfasst das Befestigungsmittel an den freien Enden der Schenkel des Halteelements Schraubmittel zur Fixierung des zumindest einen Halteelements an den Winkelelementen. Die freien Enden der Schenkel weisen beispielsweise einen Gewindeabschnitt auf, an dem mittels einer Mutter das Halteelement an den Winkelelementen verspannbar ist. Weitere Möglichkeiten der Befestigung des Halteelements an den Winkelelementen stellen beispielsweise Klemmteile dar, die über die freien Enden der Schenkel geschoben werden und ein Abheben des Leitungsstrangs vom Träger verhindern.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand eines Ausführungsbeispieles näher erläutert. Es zeigen:
- Fig. 1: Eine perspektivische Ansicht eines Winkelelementes;
- Fig. 2: einen Querschnitt durch einen Systemträger mit einem, angeordneten Winkelelement; und
- Fig. 3: eine Ansicht auf eine erfindungsgemässe Leitungsstrangbefestigung.

Grundsätzlich sind in den Figuren gleiche Teile mit den gleichen Bezugszeichen versehen.

### Wege zur Ausführung der Erfindung

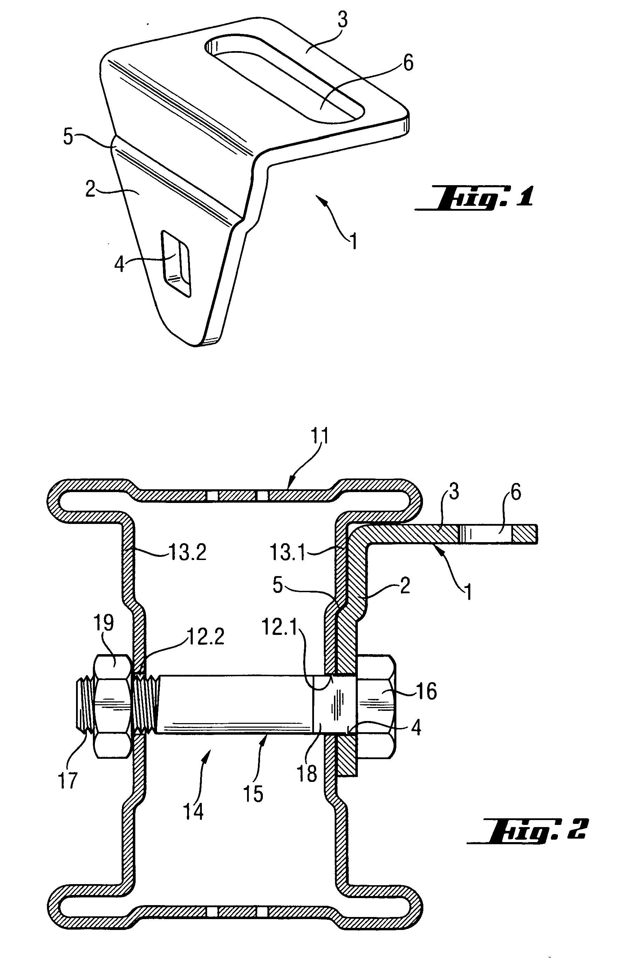

Fig. 1 zeigt eine perspektivische Ansicht eines Winkelelementes. Das Winkelelement 1 umfasst einen ersten Schenkel 2 und einen zweiten Schenkel 3. Der erste Schenkel 2 weist ein Vierkant-Loch 4 auf, das entsprechend einer Öffnung in einer Aussenwandung des Trägers ausgebildet ist, an den das Winkelelement 1 angeordnet wird. Der Schenkel 2 ist konturiert und weist eine Führungskante 5 auf, die das Winkelelement 1 beim Positionieren und Befestigen an dem Träger ausrichtet. Im zweiten Schenkel 3 ist ein Langloch 6 ausgebildet. Die minimale Länge des Langlochs 6 entspricht vorzugsweise der Summe aus dem Abstand zweier, in der Aussenwandung des Trägers vorhandenen Öffnungen und der lichten Weite dieser Öffnung. Die Öffnungen in der Aussenwandung des Trägers weisen beispielsweise einen Achsabstand von 50.0 mm und jeweils eine lichte Weite von 13.5 mm auf. Entsprechend beträgt die Länge des Langlochs in diesem Ausführungsbeispiel 65.0 mm.

In Fig. 2 ist ein Querschnitt durch einen Systemträger mit einem, angeordneten Winkelelement dargestellt. An dem Systemträger 11 ist das Winkelelement 1 angeordnet. Der erste Schenkel 2 ist komplementär zu der Aussenfläche des Systemträgers 11 ausgebildet. Beim Befestigen des Winkelelements 1 am Systemträger 11 wird das Winkelelement 1 derart ausgerichtet, dass das Langloch 6 im zweiten Schenkel 3 parallel zum Systemträger 11 verläuft. Durch die Öffnung 4 des Winkelelements 1 und durch die Öffnungen 12.1 und 12.2 in den seitlichen Aussenwandungen 13.1 bzw. 13.2 wird das Befestigungsmittel 14 zur Befestigung des Winkelelements 1 an dem Systemträger 11 hindurchgeführt.

Das Befestigungsmittel 14 umfasst eine Schraube 15, die an einem Ende einen Schraubkopf 16 und am anderen Ende einen Gewindeabschnitt 17 aufweist. Im Bereich des Schraubkopfs 16 ist ein mit Planflächen versehener Führungsabschnitt 18 ausgebildet. Der Führungsabschnitt 18 ist komplementär zur Innenkontur der Öffnung 12.1 in der Aussenwandung 13.1 des Systemträgers 11, beziehungsweise komplementär zur Öffnung 4 im ersten Schenkel 2 des Winkelelements 1. An dem Gewindeabschnitt 17 wird eine Mutter 19 zur Verspannung des Befestigungsmittels 14 vorgesehen. Mit dem Führungsabschnitt 18 wird eine Verdrehung der Schraube 15 beim Verspannen des Befestigungsmittels 14 verhindert.

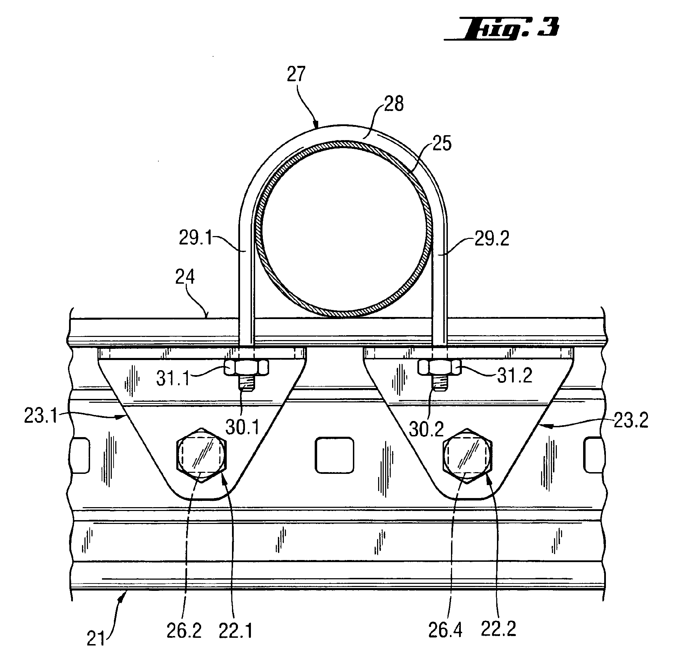

Eine Ansicht auf eine erfindungsgemässe Leitungsstrangbefestigung ist in der Fig. 3 gezeigt. Auf der Oberseite 24 des Systemträgers 21, der beispielsweise ein horizontaler Abschnitt einer Rahmenkonstruktion ist, liegt die zuvor verlegte Rohrleitung 25 auf. An dem Systemträger 21 sind mittels Befestigungsmitteln 22.1 und 22.2 zwei Winkelelemente 23.1 und 23.2 befestigt. Die Winkelelemente 23.1 und 23.2 sind an den Öffnungen 26.2 und 26.4 des Systemträgers 21 angeordnet, da diese Öffnungen 26.2 und 26.4 der vertikal ausgerichteten Tangente des seitlichen Rohrbereichs am nächsten kommen. Die Rohrleitung 25 wird von einem Haltebügel 27 umfasst, der einen, an der Aussenwandung anliegenden Halteabschnitt 28 und an diesen anschliessende Schenkel 29.1 und 29.2 aufweist. Die freien Enden 30.1 und 30.2 der Schenkel 29.1 bzw. 29.2 sind durch die, in den Winkelelementen 23.1 und 23.2 ausgebildeten Langlöcher geführt. Die freien Enden 30.1 und 30.2 weisen Gewindeabschnitte auf, an denen Muttern 31.1, bzw. 31.2 zur Verspannung des Haltebügels 27 mit den Winkelelementen 23.1 und 23.2 angeordnet sind. Da die freien Enden 30.1 und 30.2 in den Langlöchern stufenlos, parallel zum Systemträger 21 verschoben werden können, muss die Rohrleitung 25 beim Verlegen nicht auf das grobe Raster der Öffnungen (z. B. 26.2 und 26.4) an dem Systemträger 21 ausgerichtet werden.

Zusammenfassend ist festzustellen, dass eine Leitungsstrangbefestigung geschaffen wurde, die eine einfache Befestigung eines Halteelements an einem Träger ermöglicht und flexibel einsetzbar ist. Das Winkelelement kann ohne eine Verletzung eines Oberflächenschutzes montiert und demontiert werden und ist als ein wiederverwendbares Teil ausgebildet.

## Patentansprüche

1. Befestigungsvorrichtung zur Fixierung eines Leitungsstrangs, wie ein Rohr (25) oder dergleichen, an einem Träger (11, 21), insbesondere an einem Systemträger (11, 21) eines Montagesystems, wobei der Träger (11; 21) ein Profil ist und Öffnungen (12.1, 12.2, 26.2, 26.4) in einem vordefinierten Abstand an zumindest einer der Aussenwandungen (13.1, 13.2) des Trägers (11,21) aufweist, wobei
die Befestigungsvorrichtung zumindest zwei Winkelelemente (1; 23.1, 23.2) zur Befestigung zumindest eines Halteelements (27) an dem Träger (21) und zumindest ein Halteelement (27) zur Befestigung des Leitungsstrangs an den Winkelelementen (23.1, 23.2) umfasst, wobei
die Winkelelemente (1; 23.1, 23.2) jeweils einen ersten Schenkel (2) und einen, im Wesentlichen senkrecht zum ersten Schenkel (2) ausgerichteten, zweiten Schenkel (3) aufweisen, wobei der erste Schenkel (2) zumindest eine Öffnung (4) zur Befestigung des Winkelelements (1; 23.1, 23.2) am Träger (11; 21) und der zweite Schenkel (3) zumindest ein Langloch (6) zur Befestigung des Halteelements (27) am Winkelelement (1; 23.1, 23.2) aufweist, und wobei
das zumindest eine Halteelement (27) einen ersten Schenkel (29.1) und einen, mit dem ersten Schenkel (29.1) über einen Verbindungsabschnitt (28) verbundenen, zweiten Schenkel (29.2) aufweist, wobei die freien Enden (30.1, 30.2) der Schenkel (29.1, 29.2) des Halteelements (27) Befestigungsmittel aufweisen,
**dadurch gekennzeichnet, dass** der erste Schenkel (2) des Winkelelements (1; 23.1, 23.2) ein Ausrichtmittel (5) zur Ausrichtung des Winkelelements (1; 23.1, 23.2) am Träger (11; 21) umfasst und das Langloch (6) im zweiten Schenkel (3) parallel zu diesem Ausrichtmittel (5) angeordnet ist, und dass die freien Enden (30.1, 30.2) der Schenkel (29.1, 29.2) des Halteelements (27) durch die Langlöcher der Winkelelemente (23.1, 23.2) hindurchführbar sind.

2. Befestigungsvorrichlung nach Anspruch 1, **dadurch gekennzeichnet, dass** das Halteelement (27) aus einem Rundprofil, optional aus Metall, gefertigt ist.

3. Befestigungsvorrichtung nach Anspruch 1 oder 2, **dadurch gekennzeichnet, dass** die Innenkontur des Verbindungsabschnitts (28) des Halteelements (27) komplementär zu der Aussenkontur des Leitungsstrangs (25) auszubilden ist.

4. Befestigungsvorrichtung nach einem der Ansprüche 1 bis 3, **dadurch gekennzeichnet, dass** das Befestigungsmittel an den freien Enden (30.1, 30.2) der Schenkel (29.1, 29.2) des Halteelements (27) Schraubmittel zur Fixierung des zumindest einen Halteelements (27) an den Winkelelementen (23.1, 23.2) umfasst.

## Claims

1. Fastening device for fixing a leg of a conduit such as a pipe (25) or the like to a support (11, 21), in particular a system support (11, 21) of an installation system, wherein the support (11, 21) is a profiled section and has openings (12.1, 12.2, 26.2, 26.4) at predetermined intervals in at least one of the outer walls (13.1, 13.2) of the support (11, 21), wherein
the fastening device comprises at least two angle pieces (1; 23.1, 23.2) for fastening at least one holder element (27) to the support (21) and at least one holder element (27) for fastening the conduit leg to the angle pieces (23.1, 23.2), wherein
each angle piece (1; 23.1, 23.2) has a first leg (2) and a second leg (3) orientated substantially perpendicularly to the first leg (2), the first leg (2) having at least one opening (4) for fastening the angle piece (1; 23.1, 23.2) to the support (11; 21), and the second leg (3) having at least one slot (6) for fastening the holder element (27) to the angle piece (1; 23.1, 23.2), and wherein
the at least one holder element (27) has a first leg (29.1) and a second leg (29.2) joined to the first leg (29.1) by a connecting portion (28), the free ends (30.1, 30.2) of the legs (29.1, 29.2) of the holder element (27) having fastening means,
**characterized in that** the first leg (2) of the angle piece (1; 23.1, 23.2) comprises aligning means (5) for aligning the angle piece (1; 23.1, 23.2) on the support (11; 21) and the slot (6) in the second leg (3) is arranged parallel with the said aligning means (5), and **in that** the free ends (30.1, 30.2) of the legs (29.1, 29.2) of the holder element (27) can be passed through the slots in the angle pieces (23.1, 23.2).

2. Fastening device according to Claim 1, **characterized in that** the holder element (27) is fabricated from a round profiled section optionally consisting of metal.

3. Fastening device according to Claim 1 or Claim 2, **characterized in that** the inner contour of the connecting portion (28) of the holder element (27) is formed to marry the outer contour of the conduit leg (25).

4. Fastening device according to any one of Claims 1 to 3, **characterized in that** the fastening means at the free ends (30.1, 30.2) of the legs (29.1, 29.2) of the holder element (27) comprise screwing means for fixing the at least one holder element (27) to the angle pieces (23.1, 23.2).

## Revendications

1. Dispositif de fixation pour immobiliser un tronçon, tel qu'un tube (25) ou analogue, sur un support (11, 21), en particulier sur un support de système (11, 21) d'un système de montage, le support (11, 21) étant un profilé et comportant, selon un écartement prédéfini, des ouvertures (12.1, 12.2, 26.2, 26.4) dans au moins une des parois extérieures (13.1, 13.2) du support (11, 21), le dispositif de fixation comprenant au moins deux éléments coudés (1 ; 23.1, 23.2) pour la fixation d'au moins un élément de retenue (27) au support (21) et au moins un élément de retenue (27) pour la fixation du tronçon aux éléments coudés (23.1, 23.2), les éléments coudés (1 ; 23.1, 23.2) comprenant chacun une première branche (2) et une seconde branche (3) orientée sensiblement perpendiculairement à la première branche (2), la première branche (2) comportant au moins une ouverture (4) pour la fixation de l'élément coudé (1 ; 23.1, 23.2) au support (11 ; 21), et la seconde branche (3) comportant au moins un trou oblong (6) pour la fixation de l'élément de retenue (27) à l'élément coudé (1 ; 23.1, 23.2), et l'élément de retenue au nombre d'au moins un (27) comportant une première branche (29.1) et une seconde branche (29.2) reliée à la première branche (29.1) par l'intermédiaire d'une portion de liaison (28), les extrémités libres (30.1, 30.2) des branches (29.1, 29.2) de l'élément de retenue (27) comportant des moyens de fixation, **caractérisé en ce que** la première branche (2) de l'élément coudé (1 ; 23.1, 23.2) comporte un moyen d'orientation (5) pour orienter l'élément coudé (1 ; 23.1, 23.2) sur le support (11 ; 21), et le trou oblong (6) ménagé dans la seconde branche (3) est parallèle à ce moyen d'orientation (5), et **en ce que** les extrémités libres (30.1, 30.2) des branches (29.1, 29.2) de l'élément de retenue (27) peuvent traverser les trous oblongs des éléments coudés (23.1, 23.2).

2. Dispositif de fixation selon la revendication 1, **caractérisé en ce que** l'élément de retenue (27) est fabriqué à partir d'un profilé rond, optionnellement en métal.

3. Dispositif de fixation selon la revendication 1 ou 2, **caractérisé en ce que** le contour intérieur de la portion de liaison (28) de l'élément de retenue (27) est conçu de manière complémentaire au contour extérieur du tronçon (25).

4. Dispositif de fixation selon une des revendications 1 à 3, **caractérisé en ce que** le moyen de fixation disposé aux extrémités libres (30.1, 30.2) des branches (29.1, 29.2) de l'élément de retenue (27) comprend des moyens de vissage pour immobiliser l'élément de retenue au nombre d'au moins un (27) sur les éléments coudés (23.1, 23.2).
